# EUROPEAN PATENT SPECIFICATION

(11) **EP 4 197 836 B1**
(45) Date of publication and mention of the grant of the patent: **23.04.2025**
(21) Application number: 22208727.2
(22) Date of filing: 22.11.2022
(51) Int. Cl.: B60J 5/04

(54) **VEHICLE DOOR AND VEHICLE**
FAHRZEUGTÜR UND FAHRZEUG
PORTE DE VÉHICULE ET VÉHICULE

(30) Priority: 14.12.2021 JP 2021202629
(43) Date of publication of application: 21.06.2023
(73) Proprietor: MAZDA MOTOR CORPORATION, Hiroshima 730-8670 (JP)
(72) Inventor: NAKAYAMA, Daisuke, Fuchu-cho, Aki-gun, 730-8670 (JP); KOMAJI, Tomohiro, Fuchu-cho, Aki-gun, 730-8670 (JP); SHINHARA, Hidemitsu, Fuchu-cho, Aki-gun, 730-8670 (JP); MOURI, Masaki, Fuchu-cho, Aki-gun, 730-8670 (JP); ORO, Eiji, Fuchu-cho, Aki-gun, 730-8670 (JP); SANNABE, Masayoshi, Fuchu-cho, Aki-gun, 730-8670 (JP)
(74) Representative: Müller-Boré & Partner Patentanwälte PartG mbB

(56) References cited:
- EP-A1- 3 892 481
- DE-A1- 102007 026 523
- JP-A- 2019 217 939
- JP-A- 2021 003 962

## Description

### [Technical Field]

The present invention relates to a vehicle door and a vehicle.

### [Background Art]

A vehicle door includes an outer panel on a vehicle outer side and an inner panel on a cabin side. Of these panels, particularly, the outer panel is frequently touched by persons and objects. For this reason, a panel reinforcement as a reinforcing member is attached to an inner side of the outer panel, so as to prevent easy deformation of the outer panel (see Patent document 1).

Meanwhile, upon designing a vehicle, it is also important to lower a frequency of sound, which is generated at the time of closing the door, so as to produce base sound and, consequently, to give the vehicle a sense of luxury. However, in the case where the panel reinforcement, which is arranged on the inner side of the outer panel, is fixed by an adhesive with a clearance being provided therebetween, a natural vibration frequency of the outer panel is increased while rigidity thereof is increased. As a result, the sound that is generated at the time of closing the door is shifted to the high-frequency side, and the sense of luxury is lost.

### [Prior Art Documents]

### [Patent documents]

[Patent document 1] JP-A-2021-45995

JP 2021 003962 A describes that a vehicle door includes: an inner panel; and an outer panel disposed at the vehicle outer side of the inner panel. The inner panel has: an opening; a cut and rise part extending from an edge of the opening to the outer panel side; and an adhesive surface which is formed by bending a tip of the cut and rise part and adhered to the outer panel. The adhesive surface is formed with a bead having a closed recessed shape.

EP 3 892 481 A1 describes that a door structure of a vehicle includes: an outer panel; an inner member arranged on an inner side of the outer panel in a vehicle width direction; a rigid member arranged between the inner member and the outer panel; and a vibration suppression member arranged between the outer panel and the rigid member. The outer panel includes a hem section disposed on a periphery thereof and connected to the inner member by swaging.

DE 10 2007 026523 A1 describes that the arrangement has a door inner plate with one-sided and two-sided attachment sections at two sides in a thickness direction of a door. A door outer plate is arranged close to one of the sides and attached to the inner plate.

### [Summary]

### [Problem to be solved]

In view of the above, the present invention has a purpose of providing a vehicle door in which an outer panel is reinforced by a panel reinforcement and which is configured to generate low-frequency sound dominantly at the time of closing the door.

### [Means for solving the Problem]

The above purpose is achieved by the present invention as defined in claim 1.

In the present invention, the number of the adhesion sections that are provided in the lower area and in a front lower area, which may be near the front hinge, is larger than the number of the adhesion sections that are provided in the lower area and in a rear lower area, which may be away from the front hinge.

The front lower area may be in front of the rear lower area, and/or the front lower area may be closer to the front hinge than the rear lower area.

According to the present invention, the number of the adhesion sections in the upper area, which is located above the concave bottom line of the belt-like concave section of the outer panel, is larger than the number of the adhesion sections in the lower area, which is located under the concave bottom line of the belt-like concave section of the outer panel. In addition, the number of the adhesion sections in a front lower area, which may be near the front hinge, in the lower area is larger than the number of the adhesion sections in a rear lower area, which may be away from the front hinge, in the lower area. Since the number of the adhesion sections in the upper area is larger than the number of the adhesion sections in the lower area, rigidity of the upper area is higher than rigidity of the lower area. Accordingly, when an occupant touches the upper area of the outer panel to open/close the door, the upper area is prevented from being easily deflected by an external force due to the sufficiently high rigidity. In addition, since the number of the adhesion sections in the front lower area is larger than the number of the adhesion sections in the rear lower area, rigidity of the rear lower area is lower than rigidity of the front lower area. This rear lower area is an area where door closing sound is generated when the occupant closes the door, has the sufficiently low rigidity, and thus has a low natural vibration frequency. Accordingly, when the occupant closes the door, low-frequency sound, that is, the heavy door closing sound can be generated.

The plural adhesion sections may exist on the concave bottom line.

According to this configuration, since the plural adhesion sections exist on the concave bottom line, the rigidity of the belt-like concave section is sufficiently maintained.

The first belt-like convex section may have:
a convex ridge line that is located between an upper end and a lower end of the first belt-like convex section, is most projected to the vehicle outer side, and extends in the front-rear direction, and
the number of the adhesion sections provided between the concave bottom line and the convex ridge line may fall within a range of 70% to 90% of the number of the adhesion sections, at each of which the outer panel and the panel reinforcement adhere to each other.

According to this configuration, the number of the adhesion sections that are provided between the concave bottom line and the convex ridge line falls within the range of 70% to 90% of the number of the adhesion sections, at each of which the outer panel and the panel reinforcement adhere to each other. Therefore, the area, rigidity of which tends to be low, and which is located between the first belt-like convex section and the belt-like concave section, is sufficiently stiffened.

The panel reinforcement may exist in a manner to expand from a front end of the outer panel toward a rear end thereof.

According to this configuration, the panel reinforcement exists in the manner to expand from the front end of the outer panel toward the rear end thereof. Therefore, the rigidity of the outer panel is sufficiently maintained to prevent the outer panel from being easily deflected by the external force.

The panel reinforcement may have:
a first panel reinforcement section that extends from the front end of the outer panel toward the rear end thereof; and
a second panel reinforcement section that is arranged under the first panel reinforcement section and extends from the front end of the outer panel toward the rear end thereof,
the first panel reinforcement section may be fixed to the outer panel only by the adhesion section that is arranged in the upper area, and
the second panel reinforcement section may be fixed to the outer panel by the adhesion sections that are arranged in the upper area and the lower area.

According to this configuration, the panel reinforcement has: the first panel reinforcement section that extends from the front end of the outer panel toward the rear end thereof; and the second panel reinforcement section that is arranged under the first panel reinforcement section and extends from the front end of the outer panel toward the rear end thereof. Therefore, even when the vehicle is subjected to a lateral collision, the rigidity of the outer panel is sufficiently maintained to prevent the outer panel from being easily deformed by the external force.

The first panel reinforcement section may be arranged to slope downward from the front end of the outer panel toward the rear end thereof,
the second panel reinforcement section may be arranged to slope downward from the front end of the outer panel toward the rear end thereof, and
the downward slope of the second panel reinforcement section may be steeper than the downward slope of the first panel reinforcement section.

According to this configuration, the downward slope of the second panel reinforcement section is steeper than the downward slope of the first panel reinforcement section. Thus, a sufficiently large area where the first panel reinforcement section and the second panel reinforcement section are not fixed is secured in the rear lower area of the outer panel. For this reason, the rear lower area has the sufficiently low rigidity, thus has the low natural vibration frequency, and easily generates the heavy door closing sound.

A vertical length of the second belt-like convex section may be increased toward a vehicle rear side.

According to this configuration, the vertical length of the second belt-like convex section is increased toward the vehicle rear side. Thus, the area that is located between the belt-like concave section and the second belt-like convex section and has the low rigidity is increased toward the vehicle rear side. Therefore, such an area has the low natural vibration frequency and easily generates the heavy door closing sound.

The adhesion sections may be disposed only in the first belt-like convex section and the belt-like concave section.

According to this configuration, since the adhesion sections are disposed only in the first belt-like convex section and the belt-like concave section, the second belt-like convex section has the sufficiently low rigidity. For this reason, the second belt-like convex section has the low natural vibration frequency and easily generates the heavy door closing sound.

The outer panel may be
divided by a horizontal line and a vertical line, each of which passes a center of gravity of the outer panel, when the outer panel is seen from a vehicle outer side, and may have:
a first quadrant that is located above the horizontal line and in front of the vertical line;
a second quadrant that is located above the horizontal line and behind the vertical line;
a third quadrant that is located under the horizontal line and behind the vertical line; and
a fourth quadrant that is located under the horizontal line and in front of the vertical line, and
the number of the adhesion sections in each of the first quadrant and the second quadrant may be larger than the number of the adhesion sections in each of the third quadrant and the fourth quadrant.

According to this configuration, when the outer panel is seen from the vehicle outer side, the number of the adhesion sections in each of the first quadrant and the second quadrant, which are located above the horizontal line passing the center of gravity of the outer panel, is larger than the number of the adhesion sections in each of the third quadrant and the fourth quadrant, which are located under the horizontal line. Since the number of the adhesion sections in the first quadrant and the second quadrant is larger than the number of the adhesion sections in the third quadrant and the fourth quadrant, rigidity in the first quadrant and the second quadrant is higher than rigidity in the third quadrant and the fourth quadrant. Accordingly, when the occupant touches the first quadrant or the second quadrant of the outer panel to open/close the door, the first quadrant or the second quadrant of the outer panel is prevented from being easily deflected by the external force due to the sufficiently high rigidity. In addition, the third quadrant and the fourth quadrant of the outer panel have the lower rigidity than the first quadrant and the second quadrant thereof, and thus has the low natural vibration frequency. Therefore, when the occupant closes the door, the heavy door closing sound can be generated in the third quadrant and the fourth quadrant.

The number of the adhesion sections in the fourth quadrant may be larger than the number of the adhesion sections in the third quadrant.

According to this configuration, since the number of the adhesion sections in the fourth quadrant is larger than the number of the adhesion sections in the third quadrant, the rigidity in the third quadrant is lower than the rigidity in the fourth quadrant. This third quadrant is the area where the door closing sound is generated when the occupant closes the door, has the sufficiently low rigidity, and thus has the low natural vibration frequency. Therefore, when the occupant closes the door, the heavy door closing sound can be generated in the third quadrant.

The panel reinforcement may have:
a first panel reinforcement section that extends from the front end of the outer panel toward the rear end thereof; and
a second panel reinforcement section that is arranged under the first panel reinforcement section and extends from the front end of the outer panel toward the rear end thereof,
the first panel reinforcement section may be fixed to the outer panel only by the adhesion sections that are arranged in the first quadrant and the second quadrant, and
the second panel reinforcement section may be fixed to the outer panel only by the adhesion sections that are arranged in the first quadrant and the fourth quadrant or only by the adhesion sections that are arranged in the first quadrant, the fourth quadrant and the third quadrant.

According to this configuration, the panel reinforcement has: the first panel reinforcement section that extends from the front end of the outer panel toward the rear end thereof; and the second panel reinforcement section that is arranged under the first panel reinforcement section and extends from the front end of the outer panel toward the rear end thereof. Therefore, even when the vehicle is subjected to the lateral collision, the rigidity of the outer panel is sufficiently maintained to prevent the outer panel from being easily deformed by the external force.

### [Advantage]

According to the present invention, the outer panel is reinforced by the panel reinforcement, and is configured to generate the low-frequency sound dominantly at the time of closing the door.

### [Brief Description of the Drawings]

[Fig. 1] Fig. 1 is a front view in which a vehicle door according to a first embodiment of the present invention is seen from a vehicle outer side.
[Fig. 2] Fig. 2 is a cross-sectional view of the door that is taken along line II-II in Fig. 1.
[Fig. 3] Fig. 3 is a cross-sectional view of the door that is taken along line III-III in Fig. 1.
[Fig. 4] Fig. 4 is a cross-sectional view of the door that is taken along line IV-IV in Fig. 1.
[Fig. 5] Fig. 5 is a cross-sectional view of the door that is taken along line V-V in Fig. 1.
[Fig. 6] Fig. 6 is a front view of the door in Fig. 1, from which an outer panel is partially removed.
[Fig. 7] Fig. 7 is a distribution chart of vibration power that is generated at the time of closing the door in Fig. 1.
[Fig. 8] Fig. 8 is a front view of a door according to a second embodiment of the present invention, from which an outer panel is partially removed.

### [Embodiments for Carrying Out the Invention]

A description will hereinafter be made on embodiments of the present invention with reference to the accompanying drawings.

### [First Embodiment]

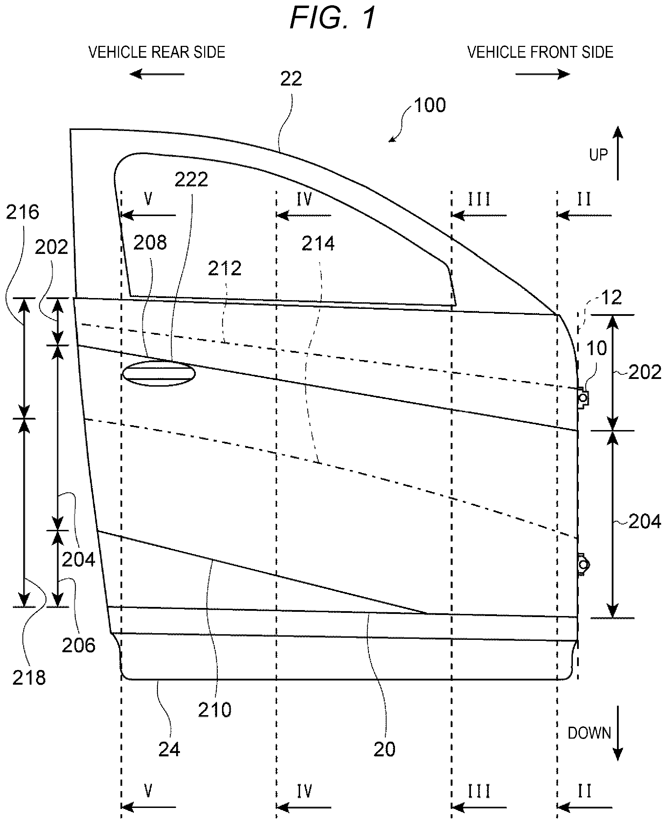

Fig. 1 illustrates a vehicle door 100 according to a first embodiment, in particular, a front door that is seen on a right side when a vehicle (not shown) is seen forward from the rear and that is located near a driver's seat or a front passenger seat on a vehicle front side (or a vehicle front portion).

The door 100 is coupled to a vehicle body, which is not illustrated, in a manner to be openable/closable about a vertical axis 12 and has: a substantially quadrilateral outer panel 20 that is attached in an openable/closable manner to the vehicle body by front hinges 10; a window frame 22 that is coupled on top of the outer panel 20; and a garnish attachment section 24 that is coupled to a bottom of the outer panel 20.

The outer panel 20 may be formed by processing a steel plate having a thickness of e.g. 0.6 to 0.7 mm or an aluminum or plastic plate having substantially the same strength as the above steel plate, and may have a streamlined shape that flows rearward from the front of the vehicle from a design perspective of giving a dynamic shape to the vehicle body and a technical perspective of reducing aerodynamic drag of the vehicle body. More specifically, the vehicle door 100 in the embodiment has three curved surfaces that are: a first belt-like convex section 202 on an upper side that is projected, in a vehicle width direction, to a vehicle outer side and extends in a vehicle front-rear direction; a belt-like concave section 204 on an intermediate side that is provided adjacent to and/or under the first belt-like convex section 202, is projected, in the vehicle width direction, to a cabin side (i.e., a vehicle inner side), and extends in the vehicle front-rear direction; and a second belt-like convex section 206 on a lower side that is provided adjacent to and/or under the belt-like concave section 204, is projected, in the vehicle width direction, to the vehicle outer side, and extends in the vehicle front-rear direction.

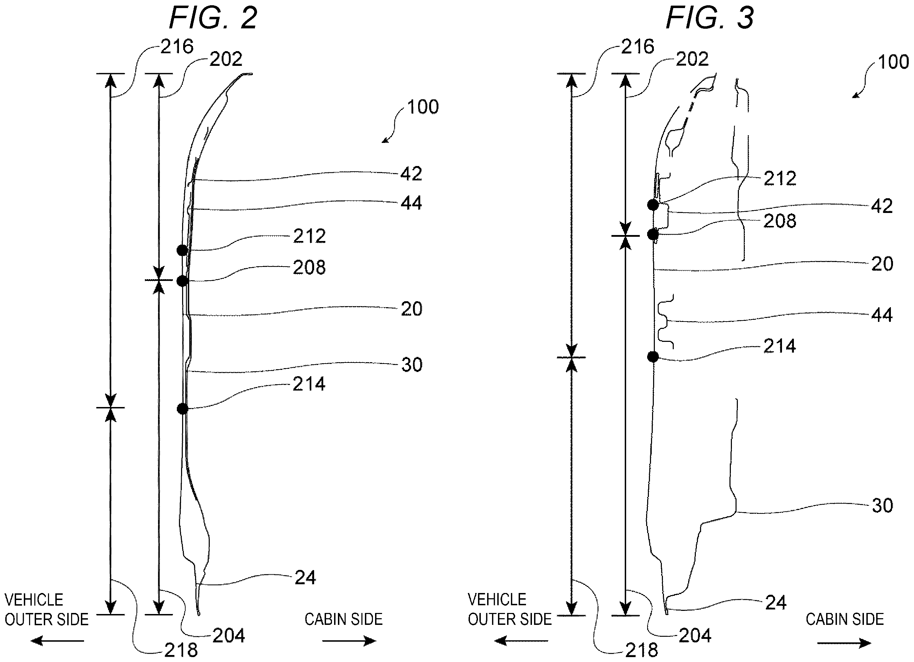

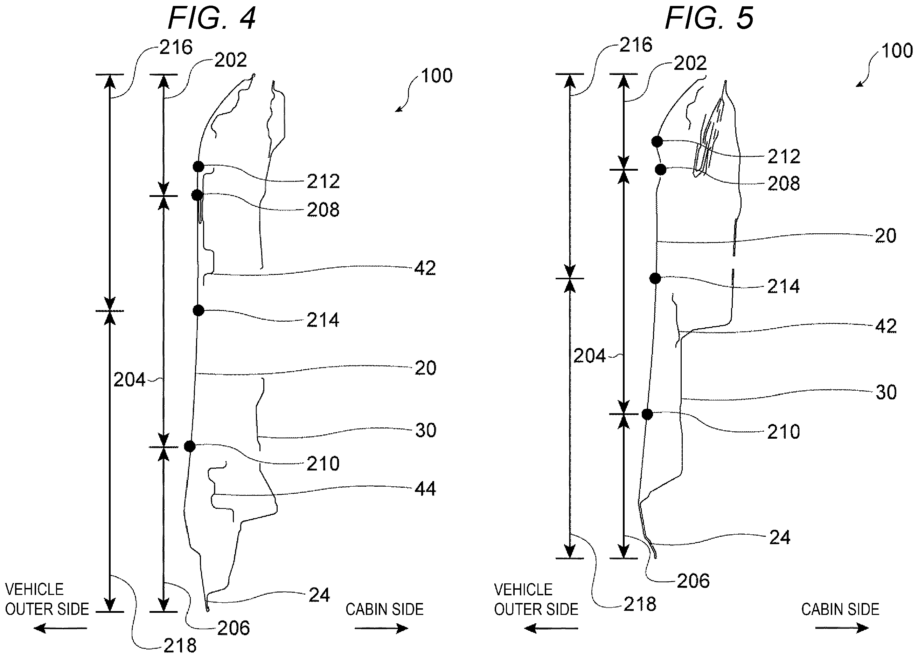

Fig. 2 to Fig. 5 are cross-sectional views of the outer panel that are respectively taken along lines II-II, III-III, IV-IV, and V-V in Fig. 1.

Returning to Fig. 1, a boundary between the first belt-like convex section 202 and the belt-like concave section 204 (that is, a line connecting inflection points that change from a convex curved surface to a concave curved surface) is indicated as a first inflection curve 208, and a boundary between the belt-like concave section 204 and the second belt-like convex section 206 (that is, a line connecting inflection points that change from the concave curved surface to a convex curved surface) is indicated as a second inflection curve 210.

As illustrated in Fig. 1, a line that indicates an upper edge of the first belt-like convex section 202 on the upper side may extend almost horizontally while a line that indicates a lower edge of the first belt-like convex section 202 (which is also a line that indicates an upper edge of the belt-like concave section 204) may extend to be gradually elevated from the front to the rear (from a right side to a left side of the drawing). A line that indicates a lower edge of the second belt-like convex section 206 on the lower side may extend almost horizontally while a line that indicates an upper edge of the second belt-like convex section 206 (which is also a line that indicates a lower edge of the belt-like concave section 204) may extend to be gradually elevated from the front to the rear. Both of the lines that respectively indicate the upper edge and the lower edge of the belt-like concave section 204 on the intermediate side extend to be gradually elevated from the front to the rear. Thus, a convex ridge line 212 connecting points, each of which is most projected, in the vehicle width direction, to the vehicle outer side of a respective vertical cross section of the first belt-like convex section 202, and a concave bottom line 214 connecting points, each of which is recessed to the vehicle inner side in a respective vertical cross section of the belt-like concave section 204, may also extend to be gradually elevated from the front to the rear.

Although not illustrated, outer surfaces of a vehicle body front portion and a rear door, each of which is adjacent to the door 100, may be each formed with a concave-convex curved surface continuous with a concave-convex curved surface of the door 100. These concave-convex curved surfaces cooperatively create dynamic, streamlined external appearance of the vehicle.

In the illustrated embodiment, a front end of the second belt-like convex section 206 may be located approximately in the middle between a front end and a rear end of the front door 100, and the second belt-like convex section 206 may appear as a substantially triangular area (the second belt-like convex section 206) from the intermediate position thereof to the rear. However, similarly to the first belt-like convex section 202 and the belt-like concave section 204, the front end of the second belt-like convex section 206 may be located at the front end of the front door 100.

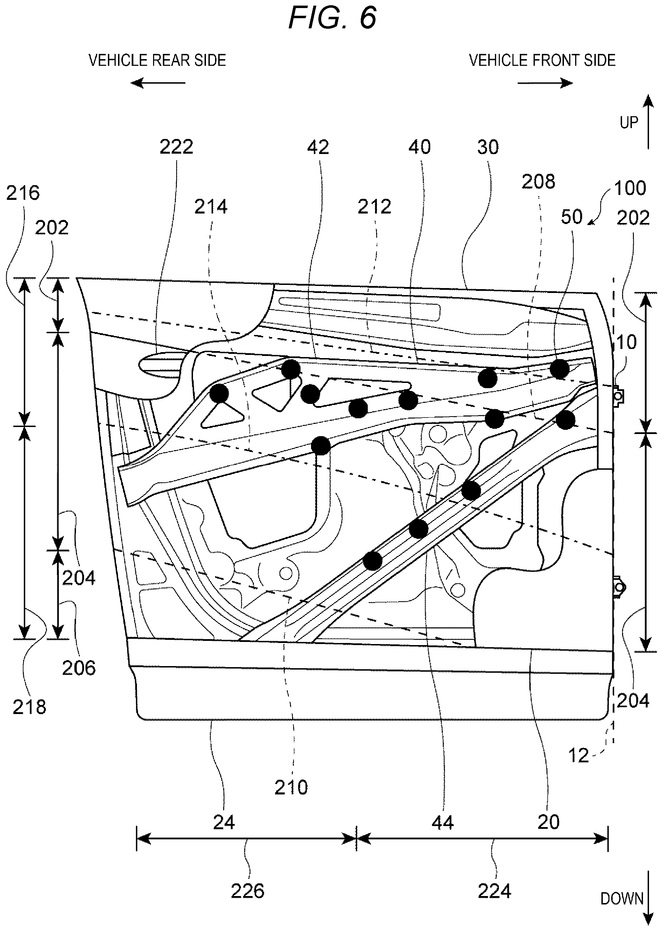

Fig. 6 is a view in which the door 100, from which the above-described outer panel 20 is partially removed, is seen from outside of the vehicle. As illustrated in Fig. 6, an inner panel 30 is disposed on the cabin side of the outer panel 20. Similarly to the outer panel 20, the inner panel 30 maybe made of a metal plate, such as of iron or aluminum, or a plastic plate.

At a position between the outer panel 20 and the inner panel 30, a panel reinforcement 40 that reinforces the outer panel 20 may be arranged along an inner surface of the outer panel 20 in a manner to expand (that is, in a manner that a vertical height is gradually increased) from a front end of the outer panel 20 toward a rear end thereof (from a right side to a left side of the drawing).

In the embodiment, the panel reinforcement 40 mainly includes a first panel reinforcement section 42 on an upper side and a second panel reinforcement section 44 on a lower side.

Similarly to the outer panel 20, the first panel reinforcement section 42 and the second panel reinforcement section 44 are each made of the metal plate, such as of iron or aluminum, or the plastic plate.

In the first embodiment, the first panel reinforcement section 42 and the second panel reinforcement section 44 may be each arranged to slope downward from the front end of the outer panel 20 toward the rear end thereof. The downward slope of the second panel reinforcement section 44 is set to be steeper than the downward slope of the first panel reinforcement section 42. Accordingly, an area surrounded by the first panel reinforcement section 42 and the second panel reinforcement section 44 expands toward a rear end.

Each of the first panel reinforcement section 42 and the second panel reinforcement section 44 fixedly adheres to the outer panel 20 by plural adhesion sections 50. For example, an epoxide-based adhesive or an adhesive using synthetic rubber as a material may be used as an adhesive for the adhesion sections 50. Each of the adhesion sections 50 may have a substantially circular shape with a diameter of approximately 30 mm.

As illustrated, Fig. 6 illustrates areas of the first belt-like convex section 202, the belt-like concave section 204, the second belt-like convex section 206, the convex ridge line 212, and the concave bottom line 214, and the like so as to illustrates positional relationships among the areas and the like, each of which has been described with reference to Fig. 1, the panel reinforcement sections 42, 44, and the adhesion sections 50.

It is clear from Fig. 6 that, at a position near an intermediate side of a front portion of the first belt-like convex section 202, a front end of the first panel reinforcement section 42 on the upper side may be fixed to the outer panel 20 and, at a position near an intermediate side of a rear portion of the belt-like concave section 204, a rear end of the first panel reinforcement section 42 may be fixed to the outer panel 20. In the embodiment, the first panel reinforcement section 42 may be thick in an intermediate portion between the front end and the rear end (is vertically large) and may be gradually thinned (becomes small vertically) from the intermediate portion toward each of the front end and the rear end. In addition, the first panel reinforcement section 42 may be arranged to diagonally cross the first inflection curve 208, which is the boundary between the first belt-like convex section 202 and the belt-like concave section 204, from the front to the rear.

At a position near a lower side of the front portion of the first belt-like convex section 202, a front end of the second panel reinforcement section 44 may be fixed to the outer panel 20 and, at a position near a lower side of an intermediate portion in the front-rear direction of the second belt-like convex section 206, a rear end of the second panel reinforcement section 44 may be fixed to the outer panel 20.

Almost all of the adhesion sections 50 for the first panel reinforcement section 42 may be located between near the convex ridge line 212 of the first belt-like convex section 202 and the concave bottom line 214 of the belt-like concave section 204, and may be arranged along the first inflection curve 208, which is the boundary between the first belt-like convex section 202 and the belt-like concave section 204, or on an upper side and a lower side of the first inflection curve 208 with the first inflection curve 208 being a center. In particular, some of the adhesion sections 50 for the first panel reinforcement section 42 may be arranged on or near the first inflection curve 208, and thus the outer panel 20 may be strongly reinforced at such positions by the first panel reinforcement section 42.

A door handle 222 for opening/closing the door 100 may be provided at a position near the rear end of the door 100 and near the first inflection curve 208. Thus, an area near the first inflection curve 208 may be an area where an occupant may frequently touch at the time of opening/closing the door, and the like. In addition, the area near the first inflection curve 208 may be an area that is likely to receive a shock and the like from the outside, and may also be a vulnerable area to deformation due to zero curvature thereof. Thus, as described above, a large number of the adhesion sections 50 may be arranged near the first inflection curve 208, and the outer panel 20 at such positions is integrated with and reinforced by the first panel reinforcement section 42.

Meanwhile, almost all of the adhesion sections 50 for the second panel reinforcement section 44 may be arranged in an area of the belt-like concave section 204, and thus may not exist in the second belt-like convex section 206.

In the embodiment, in regard to the number of the adhesion sections 50, the number of the adhesion sections 50 for the first panel reinforcement section 42 is larger than the number of the adhesion sections 50 for the second panel reinforcement section 44. For example, in the embodiment, the nine adhesion sections 50 may be provided for the first panel reinforcement section 42 while the four adhesion sections 50 may be provided for the second panel reinforcement section 44.

Just as described, in the door 100 of the embodiment, a portion of the outer panel 20 near the first inflection curve 208, which is most likely to be applied with an external force, may be integrated with and reinforced by the first panel reinforcement section 42 via the adhesion sections 50. Therefore, deformation of such a portion of the outer panel 20 is reliably prevented.

In addition, in the door 100 of the embodiment, the larger number of the adhesion sections 50 is provided in an upper area 216, which is located above the concave bottom line 214 of the belt-like concave section 204 of the outer panel 20, than the number of the adhesion sections 50 provided in a lower area 218, which is located under the concave bottom line 214. For example, the 11 adhesion sections 50 may be arranged in the upper area 216 while the 2 adhesion sections 50 may be arranged in the lower area 218. Therefore, compared to the lower area 218, in the upper area 216, a portion of the outer panel 20 and the panel reinforcement 40 supporting such a portion of the outer panel 20 are further integrated.

Furthermore, the large number of the adhesion sections 50 are provided in a front lower area 224 (see Fig. 6), which is located in the lower area 218 and may be near the front hinge 10, than in a rear lower area 226 (see Fig. 6) that may be away from the front hinge 10. For example, the two adhesion sections 50 may be arranged in the front lower area 224 while the adhesion section 50 may not be arranged in the rear lower area 226. Therefore, compared to the rear lower area 226, in the front lower area 224, the portion of the outer panel 20 and the panel reinforcement 40 supporting such a portion of the outer panel 20 are further integrated.

For this reason, in the outer panel 20, rigidity of the upper area 216 is higher than rigidity of the lower area 218. Therefore, even when the occupant strongly touches the upper area 216 of the outer panel 20, or even when the shock is applied thereto from the outside, the outer panel 20 is not easily deformed.

Moreover, since the rigidity of the lower area 218 is lower than that of the upper area 216, the lower area 218 generates sound at a low frequency to give a sense of luxury at the time of closing the door 100.

In particular, the number of the adhesion sections 50 in the rear lower area 226 is smaller than the number of the adhesion sections 50 in the front lower area 224. For this reason, the sound generated from the rear lower area 226 has the lowest frequency and is the heaviest.

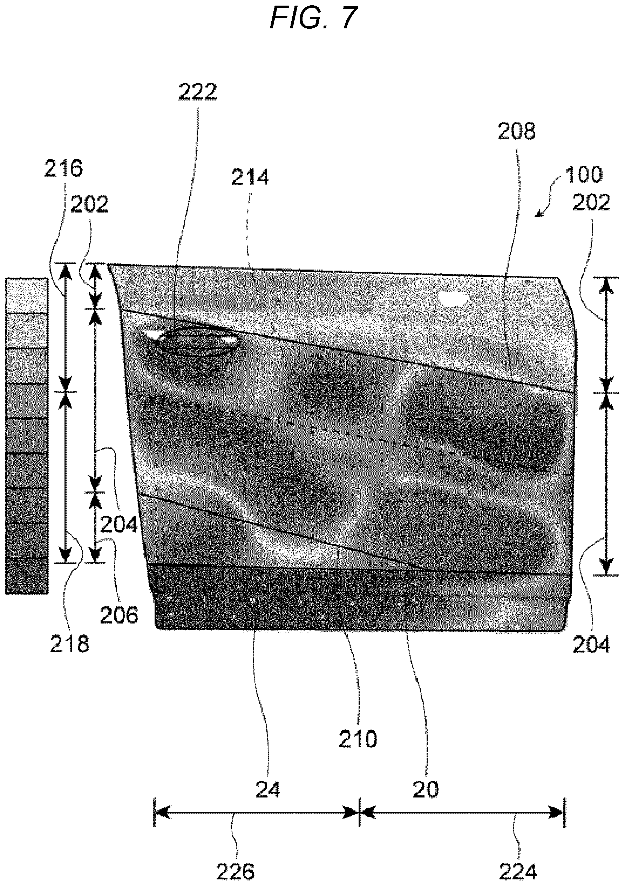

Fig. 7 illustrates distribution of vibration power that is generated on the outer panel 20 at the time of closing the door 100 in the above-described embodiment. In Fig. 7, a darker colored portion represents the higher power.

As illustrated in Fig. 7, the vibration power in the area above the first inflection curve 208 is much lower than that in the area under the first inflection curve 208. This indicates that the rigidity of the portion of the outer panel 20 near the first inflection curve 208 is high. Accordingly, even when the large force acts on the area near the first inflection curve 208 at the time of opening/closing the door 100, or the like, or even when the shock from the outside acts thereon, the portion of the outer panel 20 near the first inflection curve 208 is not easily deformed.

The vibration power in the lower area 218 under the first inflection curve 208 is much higher than that in the upper area 216 above the first inflection curve 208. In addition, when the lower area 218 is observed, the vibration power in the rear lower area 226 is higher than that in the front lower area 224. As a result, the lower area 218, particularly, the rear lower area 226 generates the bass sound at the time of closing the door.

In the above-described embodiment, most of the adhesion sections 50 are provided between the convex ridge line 212 and the concave bottom line 214. However, the number of the adhesion sections 50 to be arranged in this area is preferably within a range of 70% to 90% of the total number of the adhesion sections 50.

### [Second Embodiment]

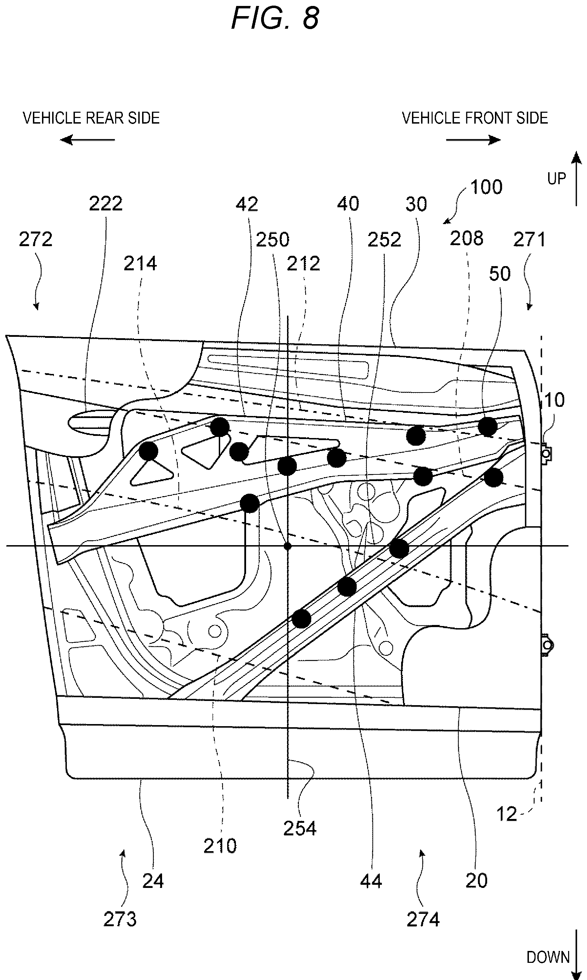

A description will be made on a vehicle door 100 according to a second embodiment of the present invention with reference to Fig. 8.

Similarly to Fig. 6, Fig. 8 is a front view of a door that is seen on the right side of the vehicle, that is, on a side appearing as the right side when the vehicle is seen forward from the rear and that is located near the driver's seat or the front passenger seat on the vehicle front side. In Fig. 8, center of gravity 250 of the outer panel 20, a horizontal line 252 passing the center of gravity 250, and a vertical line 254 passing the center of gravity 250 are added to the configuration illustrated in Fig. 6. Accordingly, a configuration of the outer panel 20 illustrated in Fig. 8 is substantially the same as the configuration of the outer panel 20 illustrated in Fig. 6. Thus, the same portions or corresponding portions will be denoted by the same reference signs and numerals, and a description thereon will not be made.

In the following description, four areas that are divided by the horizontal line 252 and the vertical line 254, that is, a front upper area, a rear upper area, a rear lower area, and a front lower area, which sequentially appear in a counterclockwise direction in Fig. 8, will respectively be referred to as a first quadrant 271, a second quadrant 272, a third quadrant 273, and a fourth quadrant 274.

Here, this terminology is used to identify four areas of the door on the vehicle right side. Thus, in the case of an opposite front door on a vehicle left side, a front upper area, a rear upper area, a rear lower area, and a front lower area, which sequentially appear in a clockwise direction when this door is seen from the outside, respectively correspond to the first quadrant, the second quadrant, the third quadrant, and the fourth quadrant.

As illustrated in Fig. 8, the center of gravity 250 of the outer panel 20 is substantially located at a center of the belt-like concave section 204. In addition, most of the first panel reinforcement section 42 on the upper side may extend obliquely downward from the front end of the door 100 toward the rear end thereof in the first quadrant 271 and the second quadrant 272, and the second panel reinforcement section 44 on the lower side extends obliquely downward from the front end of the door 100 toward the rear end thereof in the first quadrant 271, the fourth quadrant 274, and the third quadrant 273.

When Fig. 8 is seen in regard to the number of the adhesion sections 50, all of the adhesion sections 50 for the first panel reinforcement section 42 may be distributed in the first quadrant 271 and the second quadrant 272, and the number of the adhesion sections 50 in each of the first quadrant 271 and the second quadrant 272 may be almost the same. However, the number of the adhesion sections 50 provided in one of the first quadrant 271 and the second quadrant 272 may be larger than the number of the adhesion sections 50 provided in the other thereof.

The adhesion sections 50 for the second panel reinforcement section 44 may be distributed in the first quadrant 271 and the fourth quadrant 274, and the number of the adhesion sections 50 provided in the third quadrant 273 may be zero. Here, the number of the adhesion sections 50 provided in the fourth quadrant 274 is smaller than the number of the adhesion sections 50 provided in each of the first quadrant 271 and the second quadrant 272. In addition, the smaller number of the adhesion sections 50 than that in the fourth quadrant 274 may be provided in the third quadrant 273.

Just as described, in the embodiment, the number of the adhesion sections 50 provided in each of the first quadrant 271 and the second quadrant 272 is larger than the number of the adhesion sections 50 provided in each of the third quadrant 273 and the fourth quadrant 274, and the number of the adhesion sections 50 provided in the fourth quadrant 274 is larger than the number of the adhesion sections 50 provided in the third quadrant 273.

Since the adhesion sections 50 are arranged just as described, compared to the third quadrant 273 and the fourth quadrant 274, in the first quadrant 271 and the second quadrant 272, the outer panel 20 and the panel reinforcement 40 supporting the outer panel 20 are further integrated. In addition, compared to the third quadrant 273, in the fourth quadrant 274, the outer panel 20 and the panel reinforcement 40 supporting the outer panel 20 are further integrated.

For this reason, in the outer panel 20, the rigidity of each of the first quadrant 271 and the second quadrant 272 is higher than the rigidity of each of the third quadrant 273 and the fourth quadrant 274. Therefore, even when the occupant strongly touches the first quadrant 271 or the second quadrant 272 of the outer panel 20, or even when the shock is applied thereto from the outside, the outer panel 20 is not easily deformed.

The number of the adhesion sections 50 in the third quadrant 273 is smaller than the number of the adhesion sections 50 in each of the other first quadrant 271, second quadrant 272, and fourth quadrant 274. For this reason, the sound generated from the third quadrant 273 has the lowest frequency and is the heaviest.

### [Other Embodiments]

The description has been made so far on the embodiments, in each of which the present invention is applied to the door located near the driver's seat or the front passenger seat. However, the present invention can also be applied to a door (e.g. a rear door) which may be located near a rear seat in a similar manner. In addition, the present invention is not limited to the doors that are mounted on an automobile, but is also widely applicable to doors of other vehicles.

In the embodiments that have been described so far, the panel reinforcement 40 includes the two panel reinforcement sections 42, 44. However, the panel reinforcement may be formed by using a single plate material or may be formed by using three or more panel reinforcements.

### [Description of Reference Signs and Numerals]

10 Front hinge
20 Outer panel
40 Panel reinforcement
50 Adhesion section
100 Door
202 First belt-like convex section
204 Belt-like concave section
206 Second belt-like convex section
214 Concave bottom line
216 Upper area
218 Lower area
224 Front lower area
226 Rear lower area

## Claims

1. A vehicle door (100) having: an outer panel (20) that is attached in an openable/closable manner to a vehicle body by a front hinge (10); and a panel reinforcement (40) that extends in a vehicle front-rear direction on an inner side of the outer panel (20), and in which the outer panel (20) and the panel reinforcement (40) are fixed by plural adhesion sections (50), wherein
the outer panel (20) includes:
a first belt-like convex section (202) that is projected to a vehicle outer side and extends in the vehicle front-rear direction;
a belt-like concave section (204) that is provided under the first belt-like convex section (202), is projected to a cabin side, and extends in the vehicle front-rear direction; and
a second belt-like convex section (206) that is provided under the belt-like concave section (204), is projected to the vehicle outer side, and extends in the vehicle front-rear direction,
the belt-like concave section (204) includes:
a concave bottom line (214) that is located between an upper end and a lower end of the belt-like concave section (204), is most projected to the cabin side, and extends in the vehicle front-rear direction,
the outer panel (20) includes:
an upper area (216) that is located above the concave bottom line (214); and
a lower area (218) that is located under the concave bottom line (214), and
the number of the adhesion sections (50) in the upper area (216) is larger than the number of the adhesion sections (50) in the lower area (218),
**characterized in that**
the number of the adhesion sections (50) in a front lower area (224) in the lower area (218) is larger than the number of the adhesion sections (50) in a rear lower area (226) in the lower area (218).

2. The vehicle door (100) according to claim 1, wherein
the front lower area (224) is near the front hinge (10), and
the rear lower area (226) is away from the front hinge (10).

3. The vehicle door (100) according to claim 1 or 2, wherein
the plural adhesion sections (50) exist on the concave bottom line (214).

4. The vehicle door (100) according to any one of the preceding claims, wherein
the first belt-like convex section (202) has:
a convex ridge line (212) that is located between an upper end and a lower end of the first belt-like convex section (202), is most projected to the vehicle outer side, and extends in the vehicle front-rear direction, and
the number of the adhesion sections (50) provided between the concave bottom line (214) and the convex ridge line (212) falls within a range of 70% to 90% of the number of the adhesion sections (50), at each of which the outer panel (20) and the panel reinforcement (40) adhere to each other.

5. The vehicle door (100) according to any one of the preceding claims, wherein
the panel reinforcement (40) exists in a manner to expand from a front end of the outer panel (20) toward a rear end thereof.

6. The vehicle door (100) according to any one of the preceding claims, wherein
the panel reinforcement (40) has:
a first panel reinforcement section (42) that extends from the front end of the outer panel (20) toward the rear end thereof; and
a second panel reinforcement section (44) that is arranged under the first panel reinforcement section (42) and extends from the front end of the outer panel (20) toward the rear end thereof,
the first panel reinforcement section (42) is fixed to the outer panel (20) only by the adhesion section (50) that is arranged in the upper area (216), and
the second panel reinforcement section (44) is fixed to the outer panel (20) by the adhesion sections (50) that are arranged in the upper area (216) and the lower area (218).

7. The vehicle door (100) according to any one of the preceding claims, wherein
the first panel reinforcement section (42) is arranged to slope downward from the front end of the outer panel (20) toward the rear end thereof,
the second panel reinforcement section (44) is arranged to slope downward from the front end of the outer panel (20) toward the rear end thereof, and
the downward slope of the second panel reinforcement section (44) is steeper than the downward slope of the first panel reinforcement section (42).

8. The vehicle door (100) according to any one of the preceding claims, wherein
a vertical length of the second belt-like convex section (206) is increased toward a vehicle rear side.

9. The vehicle door (100) according to any one of the preceding claims, wherein
the adhesion sections (50) are disposed only in the first belt-like convex section (202) and the belt-like concave section (204).

10. The vehicle door (100) according to any one of the preceding claims, wherein
the outer panel (20) is
divided by a horizontal line (252) and a vertical line (254), each of which passes a center of gravity (250) of the outer panel (20), when the outer panel (20) is seen from a vehicle outer side, and has:
a first quadrant (271) that is located above the horizontal line (252) and in front of the vertical line (254);
a second quadrant (272) that is located above the horizontal line (252) and behind the vertical line (254);
a third quadrant (273) that is located under the horizontal line (252) and behind the vertical line (254); and
a fourth quadrant (274) that is located under the horizontal line (252) and in front of the vertical line (254), and
the number of the adhesion sections (50) in each of the first quadrant (271) and the second quadrant (272) is larger than the number of the adhesion sections (50) in each of the third quadrant (273) and the fourth quadrant (274).

11. The vehicle door (100) according to claim 10, wherein
the number of the adhesion sections (50) in the fourth quadrant (274) is larger than the number of the adhesion sections (50) in the third quadrant (273).

12. A vehicle comprising the vehicle door (100) according to the any one of the preceding claims.

## Patentansprüche

1. Fahrzeugtür (100), aufweisend: eine Außenplatte (20), die auf öffenbare/schließbare Weise an einem Fahrzeugkörper bzw. einer Fahrzeugkarosserie über ein vorderes Scharnier (10) angebracht ist; und eine Plattenverstärkung (40), die sich in einer Fahrzeug-Front-Heck-Richtung auf einer Innenseite der Außenplatte (20) erstreckt, und bei der die Außenplatte (20) und die Plattenverstärkung (40) durch mehrere Haftabschnitte (50) fixiert bzw. befestigt sind, wobei
die Außenplatte (20) enthält:
einen ersten riemenartigen konvexen Abschnitt (202), der zu einer Fahrzeugaußenseite vorsteht und sich in der Fahrzeug-Front-Heck-Richtung erstreckt;
einen riemenartigen konkaven Abschnitt (204), der unter dem ersten riemenartigen konvexen Abschnitt (202) bereitgestellt ist, zu einer Kabinen- bzw. Innenraumseite vorsteht und sich in der Fahrzeug-Front-Heck-Richtung erstreckt; und
einen zweiten riemenartigen konvexen Abschnitt (206), der unter dem riemenartigen konkaven Abschnitt (204) bereitgestellt ist, zu der Fahrzeugaußenseite vorsteht und sich in der Fahrzeug-Front-Heck-Richtung erstreckt,
der riemenartige konkave Abschnitt (204) enthält:
eine konkave Bodenlinie bzw. -leitung (214), die sich zwischen einem oberen Ende und einem unteren Ende des riemenartigen konkaven Abschnitts (204) befindet, am weitesten zu der Kabinenseite vorsteht und sich in der Fahrzeug-Front-Heck-Richtung erstreckt,
die Außenplatte (20) enthält:
einen oberen Bereich (216), der sich über der konkaven Bodenlinie (214) befindet; und
einen unteren Bereich (218), der sich unter der konkaven Bodenlinie (214) befindet, und
die Anzahl der Haftabschnitte (50) in dem oberen Bereich (216) größer ist als die Anzahl der Haftabschnitte (50) in dem unteren Bereich (218),
**dadurch gekennzeichnet, dass**
die Anzahl der Haftabschnitte (50) in einem vorderen unteren Bereich (224) in dem unteren Bereich (218) größer ist als die Anzahl der Haftabschnitte (50) in einem hinteren unteren Bereich (226) in dem unteren Bereich (218).

2. Fahrzeugtür (100) nach Anspruch 1, wobei
der vordere untere Bereich (224) in der Nähe des vorderen Scharniers (10) ist und
der hintere untere Bereich (226) von dem vorderen Scharnier (10) entfernt ist.

3. Fahrzeugtür (100) nach Anspruch 1 oder 2, wobei
die mehreren Haftabschnitte (50) an bzw. auf der konkaven Bodenlinie (214) vorhanden sind.

4. Fahrzeugtür (100) nach einem der vorhergehenden Ansprüche, wobei
der erste riemenartige konvexe Abschnitt (202) aufweist:
eine konvexe Grat- bzw. Rippenlinie bzw. -leitung (212), die sich zwischen einem oberen Ende und einem unteren Ende des ersten riemenartigen konvexen Abschnitts (202) befindet, am weitesten zu der Fahrzeugaußenseite vorsteht und sich in der Fahrzeug-Front-Heck-Richtung erstreckt, und
die Anzahl der zwischen der konkaven Bodenlinie (214) und der konvexen Gratlinie (212) bereitgestellten Haftabschnitte (50) in einem Bereich von 70 % bis 90 % der Anzahl der Haftabschnitte (50) liegt, an denen jeweils die Außenplatte (20) und die Plattenverstärkung (40) aneinander haften.

5. Fahrzeugtür (100) nach einem der vorhergehenden Ansprüche, wobei
die Plattenverstärkung (40) auf eine solche Weise vorhanden ist, dass sie sich von einem vorderen Ende der Außenplatte (20) zu einem hinteren Ende davon ausdehnt.

6. Fahrzeugtür (100) nach einem der vorhergehenden Ansprüche, wobei
die Plattenverstärkung (40) aufweist:
einen ersten Plattenverstärkungsabschnitt (42), der sich von dem vorderen Ende der Außenplatte (20) zu dem hinteren Ende davon erstreckt,
und
einen zweiten Plattenverstärkungsabschnitt (44), der unter dem ersten Plattenverstärkungsabschnitt (42) angeordnet ist und sich von dem vorderen Ende der Außenplatte (20) zu dem hinteren Ende davon erstreckt,
der erste Plattenverstärkungsabschnitt (42) nur durch den in dem oberen Bereich (216) angeordneten Haftabschnitt (50) an der Außenplatte (20) fixiert bzw. befestigt ist, und
der zweite Plattenverstärkungsabschnitt (44) durch die in dem oberen Bereich (216) und in dem unteren Bereich (218) angeordneten Haftabschnitte (50) an der Außenplatte (20) fixiert bzw. befestigt ist.

7. Fahrzeugtür (100) nach einem der vorhergehenden Ansprüche, wobei
der erste Plattenverstärkungsabschnitt (42) so angeordnet ist, dass er von dem vorderen Ende der Außenplatte (20) zu dem hinteren Ende davon schräg abfällt, der zweite Plattenverstärkungsabschnitt (44) so angeordnet ist, dass er von dem vorderen Ende der Außenplatte (20) zu dem hinteren Ende davon schräg abfällt, und
die Abwärtsschrägung des zweiten Plattenverstärkungsabschnitts (44) steiler ist als die Abwärtsschrägung des ersten Plattenverstärkungsabschnitts (42).

8. Fahrzeugtür (100) nach einem der vorhergehenden Ansprüche, wobei
eine vertikale Länge des zweiten riemenartigen konvexen Abschnitts (206) zu einer Fahrzeugheckseite hin zunimmt.

9. Fahrzeugtür (100) nach einem der vorhergehenden Ansprüche, wobei
die Haftabschnitte (50) nur in dem ersten riemenartigen konvexen Abschnitt (202) und in dem riemenartigen konkaven Abschnitt (204) angeordnet sind.

10. Fahrzeugtür (100) nach einem der vorhergehenden Ansprüche, wobei die Außenplatte (20)
durch eine horizontale Linie (252) und eine vertikale Linie (254) geteilt ist, die jeweils durch einen Schwerpunkt (250) der Außenplatte (20) verlaufen, wenn die Außenplatte (20) von einer Fahrzeugaußenseite aus betrachtet wird, und aufweist:
einen ersten Quadranten (271), der sich über der horizontalen Linie (252) und vor der vertikalen Linie (254) befindet;
einen zweiten Quadranten (272), der sich über der horizontalen Linie (252) und hinter der vertikalen Linie (254) befindet;
einen dritten Quadranten (273), der sich unter der horizontalen Linie (252) und hinter der vertikalen Linie (254) befindet; und
einen vierten Quadranten (274), der sich unter der horizontalen Linie (252) und vor der vertikalen Linie (254) befindet, und
die Anzahl der Haftabschnitte (50) in jedem des ersten Quadranten (271) und des zweiten Quadranten (272) größer ist als die Anzahl der Haftabschnitte (50) in jedem des dritten Quadranten (273) und des vierten Quadranten (274).

11. Fahrzeugtür (100) nach Anspruch 10, wobei
die Anzahl der Haftabschnitte (50) in dem vierten Quadranten (274) größer ist als die Anzahl der Haftabschnitte (50) in dem dritten Quadranten (273).

12. Fahrzeug, umfassend die Fahrzeugtür (100) nach einem der vorhergehenden Ansprüche.

## Revendications

1. Portière de véhicule (100) ayant : un panneau externe (20) qui est relié de manière ouvrable/fermable à une carrosserie de véhicule par une charnière avant (10) ; et un renforcement de panneau (40) qui s'étend dans une direction avant-arrière de véhicule sur un côté interne du panneau externe (20), et dans lequel le panneau externe (20) et le renforcement de panneau (40) sont fixés par une pluralité de sections d'adhésion (50), dans laquelle
le panneau externe (20) inclut :
une première section convexe de type courroie (202) qui est projetée vers un côté externe de véhicule et s'étend dans la direction avant-arrière de véhicule ;
une section concave de type courroie (204) qui est prévue sous la première section convexe de type courroie (202), est projetée vers un côté d'habitacle et s'étend dans la direction avant-arrière de véhicule ; et
une seconde section convexe de type courroie (206) qui est prévue sous la section concave de type courroie (204), est projetée vers le côté externe de véhicule et s'étend dans la direction avant-arrière de véhicule,
la section concave de type courroie (204) inclut :
une ligne inférieure concave (214) qui est située entre une extrémité supérieure et une extrémité inférieure de la section concave de type courroie (204), est le plus projetée vers le côté d'habitacle et s'étend dans la direction avant-arrière de véhicule,
le panneau externe (20) inclut :
une zone supérieure (216) qui est située au-dessus de la ligne inférieure concave (214) ; et
une zone inférieure (218) qui est située sous la ligne inférieure concave (214), et le nombre des sections d'adhésion (50) dans la zone supérieure (216) est supérieur au nombre des sections d'adhésion (50) dans la zone inférieure (218),
**caractérisée en ce que**
le nombre des sections d'adhésion (50) dans une zone inférieure avant (224) dans la zone inférieure (218) est supérieur au nombre des sections d'adhésion (50) dans une zone inférieure arrière (226) dans la zone inférieure (218).

2. Portière de véhicule (100) selon la revendication 1, dans laquelle
la zone inférieure avant (224) est proche de la charnière avant (10), et
la zone inférieure arrière (226) est à l'écart de la charnière avant (10).

3. Portière de véhicule (100) selon la revendication 1 ou 2, dans laquelle
la pluralité de sections d'adhésion (50) existent sur la ligne inférieure concave (214).

4. Portière de véhicule (100) selon l'une quelconque des revendications précédentes, dans laquelle
la première section convexe de type courroie (202) a :
une ligne de cannelure convexe (212) qui est située entre une extrémité supérieure et une extrémité inférieure de la première section convexe de type courroie (202), est le plus projetée vers le côté externe de véhicule et s'étend dans la direction avant-arrière de véhicule, et
le nombre des sections d'adhésion (50) prévues entre la ligne inférieure concave (214) et la ligne de cannelure convexe (212) tombe au sein d'une plage de 70 % à 90 % du nombre des sections d'adhésion (50), au niveau de chacune desquelles le panneau externe (20) et le renforcement de panneau (40) adhèrent l'un à l'autre.

5. Portière de véhicule (100) selon l'une quelconque des revendications précédentes, dans laquelle
le renforcement de panneau (40) existe de manière à subir une expansion d'une extrémité avant du panneau externe (20) vers une extrémité arrière de celui-ci.

6. Portière de véhicule (100) selon l'une quelconque des revendications précédentes, dans laquelle
le renforcement de panneau (40) a :
une première section de renforcement de panneau (42) qui s'étend de l'extrémité avant du panneau externe (20) vers l'extrémité arrière de celui-ci ; et
une seconde section de renforcement de panneau (44) qui est agencée sous la première section de renforcement de panneau (42) et s'étend de l'extrémité avant du panneau externe (20) vers l'extrémité arrière de celui-ci,
la première section de renforcement de panneau (42) est fixée au panneau externe (20) uniquement par la section d'adhésion (50) qui est agencée dans la zone supérieure (216), et
la seconde section de renforcement de panneau (44) est fixée au panneau externe (20) par les sections d'adhésion (50) qui sont agencées dans la zone supérieure (216) et la zone inférieure (218).

7. Portière de véhicule (100) selon l'une quelconque des revendications précédentes, dans laquelle
la première section de renforcement de panneau (42) est agencée pour s'incliner vers le bas de l'extrémité avant du panneau externe (20) vers l'extrémité arrière de celui-ci,
la seconde section de renforcement de panneau (44) est agencée pour s'incliner vers le bas de l'extrémité avant du panneau externe (20) vers l'extrémité arrière de celui-ci, et
la pente vers le bas de la seconde section de renforcement de panneau (44) est plus raide que la pente vers le bas de la première section de renforcement de panneau (42).

8. Portière de véhicule (100) selon l'une quelconque des revendications précédentes, dans laquelle
une longueur verticale de la seconde section convexe de type courroie (206) est augmentée vers un côté arrière de véhicule.

9. Portière de véhicule (100) selon l'une quelconque des revendications précédentes, dans laquelle
les sections d'adhésion (50) sont disposées uniquement dans la première section convexe de type courroie (202) et la section concave de type courroie (204).

10. Portière de véhicule (100) selon l'une quelconque des revendications précédentes, dans laquelle
le panneau externe (20) est
divisé par une ligne horizontale (252) et une ligne verticale (254) dont chacune passe devant un centre de gravité (250) du panneau externe (20) lorsque le panneau externe (20) est vu depuis un côté externe de véhicule, et a :
un premier quadrant (271) qui est situé au-dessus de la ligne horizontale (252) et devant la ligne verticale (254) ;
un deuxième quadrant (272) qui est situé au-dessus de la ligne horizontale (252) et derrière la ligne verticale (254) ;
un troisième quadrant (273) qui est situé sous la ligne horizontale (252) et derrière la ligne verticale (254) ; et
un quatrième quadrant (274) qui est situé sous la ligne horizontale (252) et devant la ligne verticale (254), et
le nombre des sections d'adhésion (50) dans chacun du premier quadrant (271) et du deuxième quadrant (272) est supérieur au nombre des sections d'adhésion (50) dans chacun du troisième quadrant (273) et du quatrième quadrant (274).

11. Portière de véhicule (100) selon la revendication 10, dans laquelle
le nombre des sections d'adhésion (50) dans le quatrième quadrant (274) est supérieur au nombre des sections d'adhésion (50) dans le troisième quadrant (273).

12. Véhicule comprenant la portière de véhicule (100) selon l'une quelconque des revendications précédentes.
